# EUROPEAN PATENT APPLICATION

(11) **EP 1 603 334 A1**
(43) Date of publication of application: **07.12.2005**
(21) Application number: 03772874.8
(22) Date of filing: 18.11.2003
(51) Int. Cl.: H04N 5/76

(54) **VIDEO CHECK SYSTEM AND METHOD**

(30) Priority: 19.11.2002 JP 2002334549
(71) Applicant: NEC CORPORATION, Minato-ku, Tokyo 108-8001 (JP)
(72) Inventor: KASUTANI, Eiji, Minato-ku, Tokyo 108-8001 (JP); SATO, Takami, Minato-ku, Tokyo 108-8001 (JP); YAMADA, Akio, Minato-ku, Tokyo 108-8001 (JP); OAMI, Ryoma, Minato-ku, Tokyo 108-8001 (JP)
(74) Representative: Vossius & Partner
(86) International application number: PCT/JP2003/014671
(87) International publication number: WO 2004/047436

(57) **Abstract**

There are provided a video viewing system and method thereof which are capable of easily grasping the usage status of a plurality of video groups.

An on-air broadcast video, edited video, and raw material video are stored in a video storage unit 106, and mutual correlations obtained from a series of correlations of these video groups are stored in a correlation information storage unit 108. When any one video of the on-air broadcast video, edited video, and raw material video is specified, a correlation information retrieval unit 107 retrieves the mutual correlation of the specified video, and a frequency-of-use calculation unit 109 generates the frequency-of-use of the specified video in other video groups based on the retrieved correlation.

The generated frequency-of-use is graphed and displayed on a display unit.

## Description

### Technical Field

The present invention relates to technology in which an arbitrary video is retrieved and viewed from a plurality of video groups and, more particularly to a video viewing system and method thereof for viewing information on video production.

### Background Art

For the purpose of more adequately describing a technological level for the present invention at the present time, all descriptions of the patents, patent applications, patent gazettes, scientific papers, and the like which are quoted and identified in the present application will be incorporated by reference herein.

First, in the following description, an underlying video which is typified by videos, and the like taken on site is called a "raw material video", a video in which the raw material video is edited and produced is called an "edited video", and a video which is finally broadcast based on the edited video is called an "on-air broadcast video", respectively.

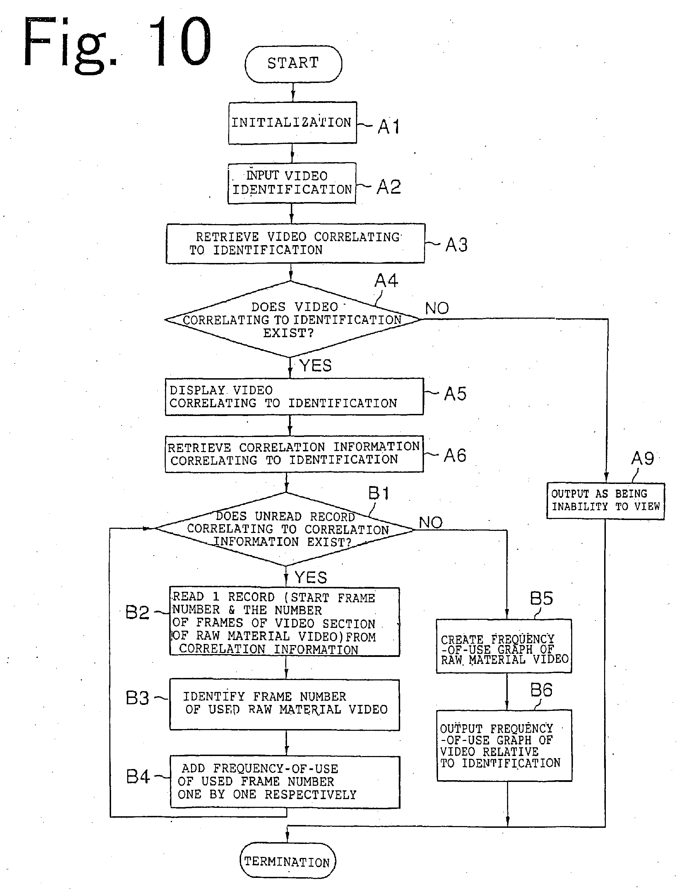

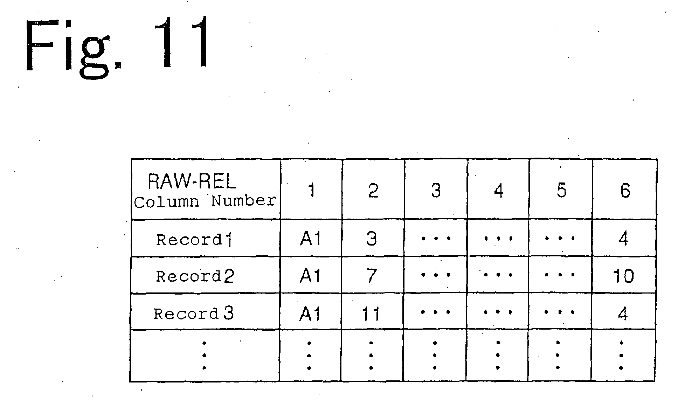

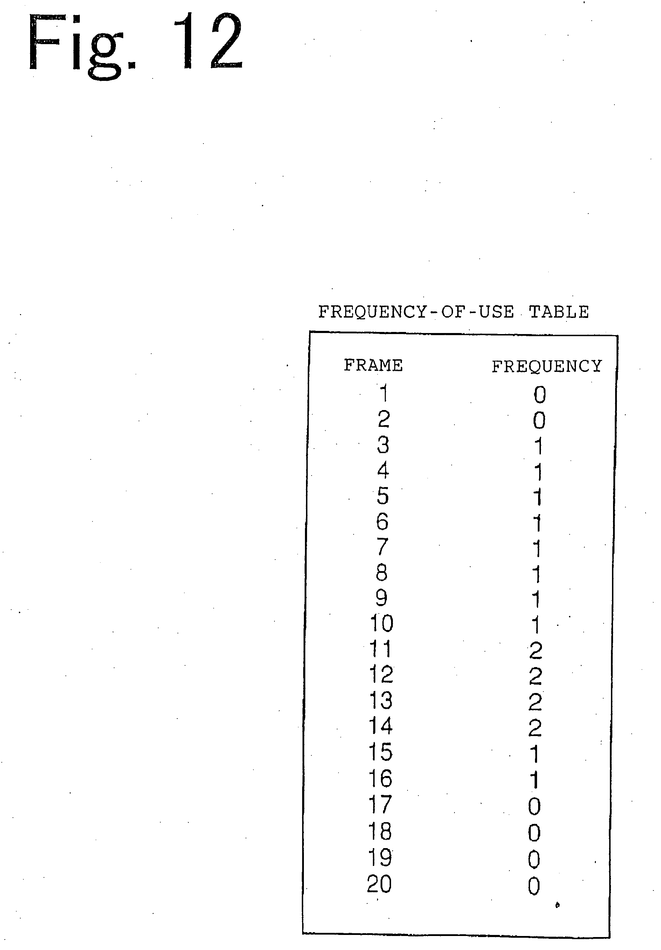

In general, editing work is indispensable to video production, and all the videos taken on site are directly used on rare occasion. And, in broadcasting the edited videos, broadcast stations may cut the videos halfway due to time restriction, or may run a telop. For this reason, all the videos actually sent on the air do not coincide with the edited videos. When these on-air broadcast videos and edited videos are stored, from which necessary portions are selected to produce a new video, it is necessary that video groups which are made into them be managed and target videos be able to be retrieved and viewed.
An example of such a video viewing system is disclosed in the Japanese Unexamined Patent Publication No. 11(1999)-266422. In the broadcast program management system disclosed in the above patent gazette, association between a complete package (on-air broadcast video)and a source material (edited video) is stored in memory beforehand. To be more precise, complete package data stored in memory is divided into a shot for each cut, a similarity between a video of this complete package shot and a video section in a source material is determined using a correlation value of a frame image. Thus, video section information for each complete package shot and video section information for the source material, which have been determined on the similarity therebetween may be brought into association (refer to paragraph number 0048 to 0058, and FIG.10 and FIG. 11 in the aforementioned patent gazette). Based on this complete package and source material related data, it is possible to retrieve and reproduce the source material video section correlating to any complete package video section to each other (refer to paragraph number 0060 and 0061, and FIG 12 in the aforementioned patent gazette).

### Problems to be Solved by the Invention

However, the aforementioned conventional system is not taking access to a raw material video related to an on-air broadcast video and edited video into account. The raw material video should be used in accordance with various aims, but is a matrix of the subsequent video production, as well as a precious video group providing a primary source.

For example, an edited video is produced using part of a raw material video in accordance with awareness of the issues or intension on each occasion, but the awareness of the issues changes with time, and another portion of the same raw material video might be recognized as an important scene. Taking news for example, even though news to be broadcast on the same date can be produced with the reuse of an edited video, the edited video alone is insufficient for producing more detailed contents such as feature programs at a later date, and thus necessary videos are often found back to the raw material video.

In this way, a grasp of the usage status of a raw material video becomes important, for example, when only used portions are collected to produce new contents, or when unaired portions are used to produce new contents by contraries. The aforementioned conventional system can only reproduce the edited video correlating to the on-air broadcast video, and not grasp which part of the raw material video is used in which video.

Furthermore, the conventional system can only reproduce the edited video correlating to the on-air broadcast video, but not grasp how often which part of the video is used. Frequency-of-use is one important criterion in selecting portions necessary for the video production. There is even a case in which only portions with much frequency-of-use are used to produce a digest. On the other hand, there may be a case in which less used portions or no used portions are utilized to produce new contents. In any event, the conventional system does not contribute to improved production efficiency in making an attempt to produce a new video in response to such a demand, at all.

Accordingly, an object of the present invention is to provide a video viewing system and method thereof for enabling an easy grasp of the usage status of a plurality of video groups.

Another object of the present invention is to provide a video viewing system and method thereof for enabling the frequency-of-use of a video to view.

Still another object of the present invention is to provide a video viewing system and method thereof for enabling increased production efficiency by easing access to a portion with high (or low) frequency-of-use.

### Disclosure of the Invention

According to a video viewing system of a first aspect of the present invention, a video of any one video group of a first video group, and a second video group produced by use of said first video group is specified, whereby frequency-of-use in other video groups of said specified video is found and displayed.

According to a video viewing system of a second aspect of the present invention, a video of any one video group of a first video group, a second video group produced by use of said first video group, and a third video group produced by use of said second video group is specified, whereby the frequency-of-use of said specified video in other video groups having a correlation with said specified video is found and displayed.

A video viewing system according to a third aspect of the present invention includes a first storage unit which stores to enable retrieval of a plurality of video groups having a series of correlations that at least one video of one video group is used to produce a video of the next video group, a second storage unit which stores to enable retrieval of mutual correlations obtained from said series of correlations, a frequency-of-use generation unit which upon specification of a video of any one video group of said plurality of video groups, retrieves a correlation with respect to said specified video from said second storage unit to generate the frequency-of-use of said specified video in other video groups based on the retrieved correlation, and a control unit which displays said frequency-of-use on a display unit.

It is preferable that said second storage unit store to enable retrieval of correlation information showing that each video section correlates to one video section of other video groups for each of said plurality of video groups.

Said frequency-of-use generation unit might be configured so as to have a retrieval unit which upon specification of a video of any one video group of said plurality of video groups, retrieves correlation information on said specified video from said second storage unit to identify a used video section in other video groups of said specified video, and a frequency-of-use calculation unit which generates the frequency-of-use of said specified video in said other video groups based on said used video section.

Said control unit might graph and display the frequency-of-use of said specified video in said other video groups based on the video section of said specified video.

Moreover, it is preferable that said control unit display a pointer movable in a time axis direction of the video section of said specified video together with said graphed frequency-of-use, and display said specified video from the time position indicated by said pointer when said pointer is operated.

A video viewing method according to a fourth aspect of the present invention comprising:
a) storing to enable retrieval of a plurality of video groups having a series of correlations that at least one video of one video group is used to produce a video of the next video group;
b) storing to enable retrieval of correlation information which is generated from said series of correlations and which shows that each video section correlates to one video section of other video groups for each of said plurality of video groups;
c) retrieving, upon specification of a video of any one video group of said plurality of video groups, correlation information on said specified video to identify a used video section in other video groups of said specified video;
d) generating the frequency-of-use of said specified video in said other video groups based on said used video section; and
e) displaying said frequency-of-use on a display unit.

In said step d), said frequency-of-use might be generated by identifying the used frame number of said specified video from said used video section, and counting said used frame number in all used video sections in said other video groups.

According to a fifth aspect of the present invention, in a video viewing method for viewing a desired video from a plurality of videos, a video of any one video group of a first video group, and a second video group produced by use of said first video group is specified, whereby frequency-of-use in other video groups of the specified video is found and displayed.

The frequency-of-use of said specified video in said other video groups may be found based on a used video section in other video groups of said specified video. Said used video section may be identified based on correlation information showing that each video section correlates to one video section of other video groups for each of a plurality of video groups having a series of correlations that at least one video of one video group is used to produce a video of the next video group. The frequency-of-use of said specified video in said other video groups may be graphed and displayed based on the video section of said specified video.

It is possible that a pointer movable in a time axis direction of the video section of said specified video is displayed together with said graphed frequency-of-use, and that said specified video is displayed from the time position indicated by said pointer when said pointer is operated.

Said frequency-of-use may be sorted and displayed in any one of ascending order and descending order.

According to a sixth aspect of the present invention, in a video viewing method for viewing a desired video from a plurality of videos, a video of any one video group of a first video group, a second video group produced by use of said first video group, and a third video group produced by use of said second video group is specified, whereby the frequency-of-use of said specified video in other video groups having a correlation with the specified video is found and displayed.

The frequency-of-use of said specified video in said other video groups may be found based on a used video section in other video groups of said specified video. Said used video section may be identified based on correlation information showing that each video section correlates to one video section of other video groups for each of a plurality of video groups having a series of correlations that at least one video of one video group is used to produce a video of the next video group. The frequency-of-use of said specified video in said other video groups may be graphed and displayed based on the video section of said specified video.

It is possible that the pointer movable in the time axis direction of the video section of said specified video is displayed together with said graphed frequency-of-use, and that said specified video is displayed from the time position indicated by said pointer when said pointer is operated.

Said frequency-of-use may be sorted and displayed in any one of ascending order and descending order.

According to the present invention, when a video on the part of being used is specified, the frequency-of-use information thereof is generated, visualized, and displayed. For this reason, the usage status of a plurality of video groups may be easily grasped.

Furthermore, a pointer which is movable on a time axis is provided on a screen which displays the frequency-of-use, and operated with a mouse, and the like, thereby providing ease of access to a portion with high (or low) frequency-of-use to achieve increased production efficiency.

### Brief Description of the Drawings

FIG. 1 is a block diagram showing the configuration of a video viewing system according to a first embodiment of the present invention.
FIG. 2A is a diagram showing an example of the on-air broadcast video correlated information format in the first embodiment.
FIG. 2B is a diagram showing an example of an edited video correlated information format.
FIG 2C is a diagram showing an example of a raw material video correlated information format.
FIG. 2D is a diagram showing an example of a general-purpose correlation information format.
FIG 3A is a schematic view showing an example of the storage table of the on-air broadcast video correlated information in the first embodiment.
   FIG 3B is a schematic view showing an example of the storage table of edited video correlated information.
   FIG. 3C is a schematic view showing an example of the storage table of raw material video correlated information.
FIG 4A is a schematic view showing a correlation between the on-air broadcast video and the edited video, and a correlation between the edited video and the raw material video in the first embodiment.
FIG 4B is a schematic view showing a correlation between an on-air broadcast video and an edited video and a raw material video.
FIG 5 is a diagram showing a display example of viewing the raw material video correlated information in the first embodiment of the present invention.
FIG. 6 is a diagram showing a display example of viewing the edited video correlated information in the first embodiment of the present invention.
FIG 7 is a diagram showing a display example of viewing the on-air broadcast video correlated information in the first embodiment of the present invention.
FIG. 8 is a diagram showing a display example of viewing the raw material video correlated information including the frequency-of-use information in the first embodiment of the present invention.
FIG 9 is a schematic view showing an example of the operation screen of the video viewing system according to the first embodiment of the present invention.
FIG 10 is a flow chart showing the overall operation of the first embodiment of the present invention.
FIG. 11 is a schematic view showing an example of the storage table of the raw material video correlated information in the first embodiment of the present invention.
FIG. 12 is a frequency-of-use table showing the result counted for each frame in the first embodiment of the present invention.
FIG 13 is a graph in which the frequency-of-use table of FIG. 12 is visualized.
FIG 14 is a block diagram of a video viewing system according to a fourth embodiment of the present invention.

### Best Mode for Carrying Out the Invention

### (First Embodiment)

### A: System Configuration

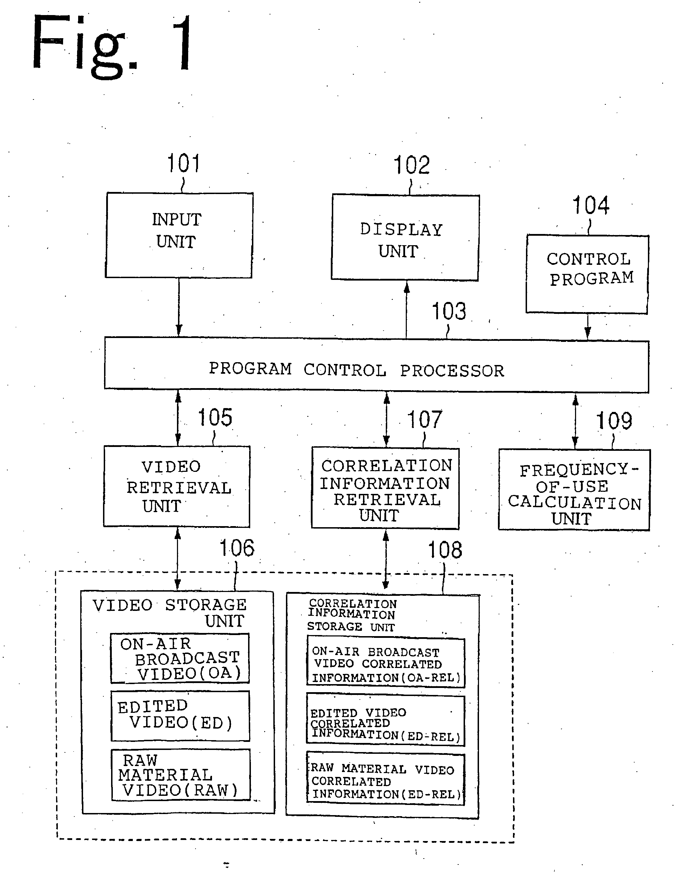

FIG. 1 is a block diagram showing the configuration of a video viewing system according to a first embodiment of the present invention. In FIG. 1, an entry unit 101 comprises an input device such as a keyboard and a pointing device, in which selection of a video to view or various instructions may be entered. A display unit 102 is a monitor, which displays a video viewing screen described later, and provides a graphical user interface in cooperation with the entry unit 101.

The video viewing system according to the present embodiment includes a program control processor 103 which controls video viewing related processing or the action of the entire system by executing a control program 104, a video retrieval unit 105, a video storage unit 106, a correlation information retrieval unit 107, a correlation information storage unit 108, and a frequency-of-use calculation unit 109. The video retrieval unit 105, the correlation information retrieval unit 107, and the frequency-of-use calculation unit 109 execute video retrieval, correlation information retrieval and a frequency-of-use calculation described later under the control of the program control processor 103, respectively.

In the video storage unit 106, there are stored an on-air broadcast video group (OA), an edited video group (ED), and a raw material video group (RAW). The raw material video group (RAW) involves storage of the raw material video filmed on-site, for example, as digital image data, and each raw material video thereof is managed together with a unique identification. In addition, retention of video related information such as a title, and production date and time is also possible.
The edited video group (ED) involves storage of a broadcast video in which the raw material video is carefully selected and edited, for example, as digital image data, and each edited video thereof is managed together with a unique identification. In addition, the retention of the video related information such as a title, and production date and time is also possible.

The on-air broadcast video group (OA) involves storage of a finally broadcast video, for example, as digital image data, and each on-air broadcast video thereof is managed together with a unique identification. In addition, the retention of the video related information such as a title, and production date and time is also possible.
Upon receiving a video retrieval command from the program control processor 103, the video retrieval unit 105 retrieves the video data correlating to the specified video identification from the video storage unit 106. The retrieved video data is displayed on the display unit 102 in conjunction with video data related information described later. When the video retrieval command contains the starting position of a video, the retrieved video may be reproduced from the starting position, or the selected video may be located at the starting position.

In the correlation information storage unit 108, there are stored on-air broadcast video correlated information (OA-REL), edited video correlated information (ED-REL), and raw material video correlated information (RAW-REL). The correlation information will be described in detail later.

Upon receiving the correlation information retrieval command, the correlation information retrieval unit 107 retrieves correlation information on the specified video from the correlation information storage unit 108. The retrieved correlation information is displayed on the display unit 102 in a predetermined form as will hereinafter be described. On this occasion, a pointer providing access to other correlating videos is displayed together.
The frequency-of-use calculation unit 109 calculates how many times a frame contained in the raw material video is used in the edited video or the on-air broadcast video, while referring to the aforementioned correlation information. The calculated frequency-of-use is graphed and displayed on a predetermined window on the display unit 102. The frequency-of-use calculation will be described in detail later.

### B: Correlation information

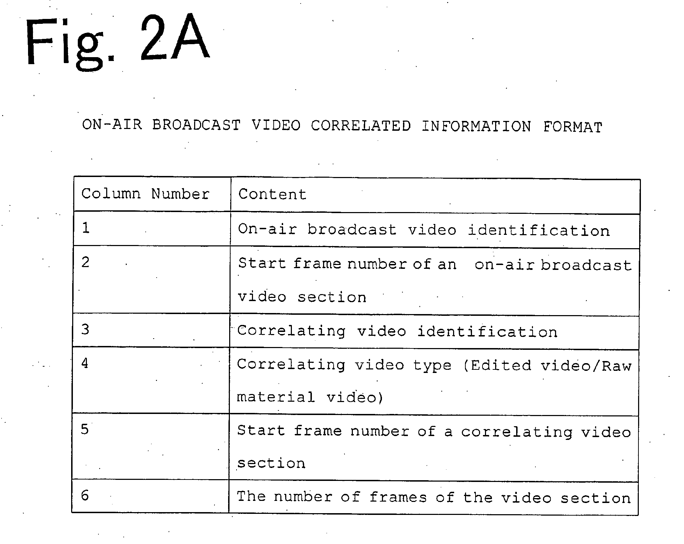

FIG. 2A is a diagram showing an example of an on-air broadcast video correlated information format.

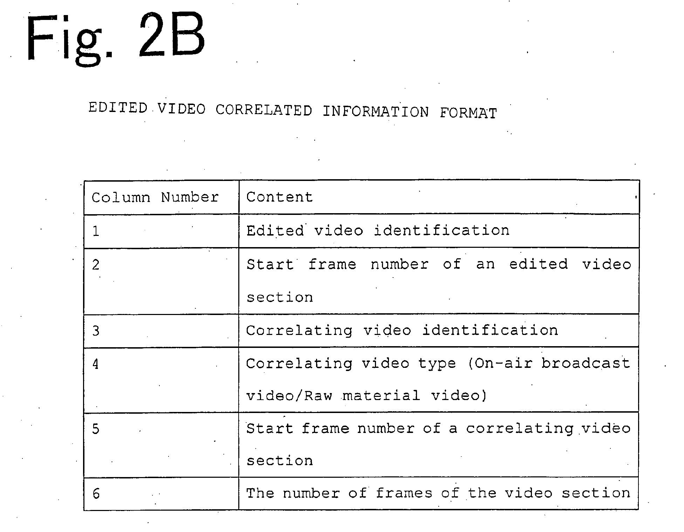

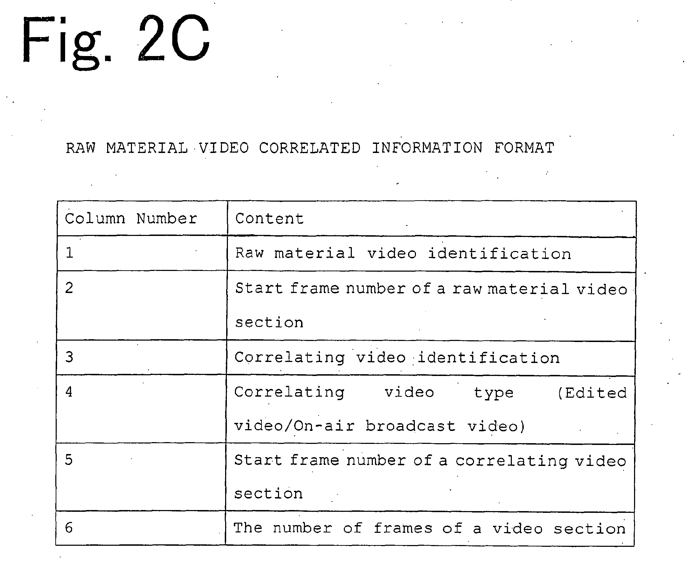

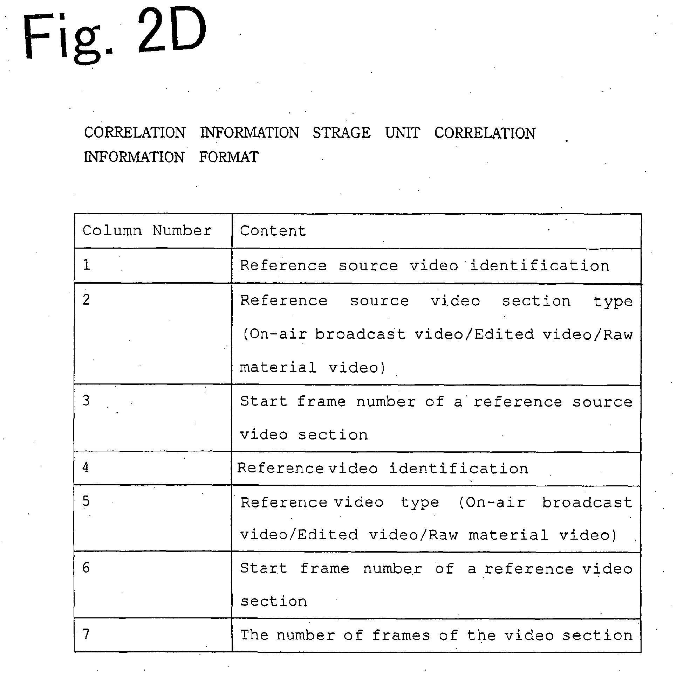

FIG. 2B is a diagram showing an example of an edited video correlated information format. FIG. 2C is a diagram showing an example of a raw material correlated information format. FIG. 2D is a diagram showing an example of a general-purpose correlated information format.

As shown in FIG 2A, the on-air broadcast video correlated information is the information in which a correlation between the on-air broadcast video and the edited video and the raw material video is described. More specifically, which part of one on-air broadcast video is quoted from which part of which edited video or raw material video is described. The on-air broadcast video correlated information is composed of six columns, in which an on-air broadcast video identification is described in column number 1, the start frame number of an on-air broadcast video section in column number 2, the correlating video identification in column number 3, the correlating video type (edited video or raw material video) in column number 4, the start frame number of the video section of the correlating video in column number 5, and the number of frames of the video section thereof in column number 6, respectively. Such a description makes it possible to identify that one video section of one on-air broadcast video correlates to which video section of the edited video or the raw material video.

Note that a correlation with respect to each on-air broadcast video may be stored in separate correlation information files respectively, or the correlation with respect to each on-air broadcast video may be stored in one correlation information file. For example, a correlation with respect to an on-air broadcast video A may be stored in a correlation information file a, a correlation with respect to an on-air broadcast video B may be stored in a correlation information file b, and correlations with respect to both the on-air broadcast video A and B may be stored in one correlation information file.

As shown in FIG. 2B, the edited video correlated information is the information that describes which part of one edited video is used in which part of which on-air broadcast video, or which part of one edited video is quoted from which part of which raw material video. The edited video correlated information is composed of six columns, in which an edited video identification is described in column number 1, the start frame number of an edited video section in column number 2, the correlating video identification in column number 3, the correlating video type (on-air broadcast video or raw material video) in column number 4, the start frame number of the video section of the correlating video in column number 5, and the number of frames of the video section thereof in column number 6, respectively. Such a description makes it possible to identify that one video section of one edited video correlates to which video section of the on-air broadcast video or the raw material video.

As shown in FIG 2C, the raw material video correlated information is the information that describes which part of one raw material video is used in which part of which edited video or on-air broadcast video. The raw material video correlated information is composed of six columns, in which a raw material video identification is described in column number 1, the start frame number of a raw material video section in column number 2, the correlating video identification in column number 3, the correlating video type (edited video or on-air broadcast video) in column number 4, the start frame number of the video section of the correlating video in column number 5, and the number of frames of the video section thereof in column number 6, respectively. Such a description makes it possible to identify that one video section of one raw material video correlates to which video section of the edited video or the on-air broadcast video.

In place of the respective correlation information formats shown in FIG 2A to FIG 2C, one format shown in FIG. 2D may be used. Namely, as a general-purpose format, a reference source video identification is described in column number 1, a reference source video type (on-air broadcast video, edited video, or raw material video) in column number 2, the start frame number of a reference source video section in column number 3, a referent video identification in column number 4, a referent video type (on-air broadcast video, edited video, or raw material video) in column number 5, the start frame number of a referent video section in column number 6, and the number of frames of the video section thereof in column number 7, respectively.

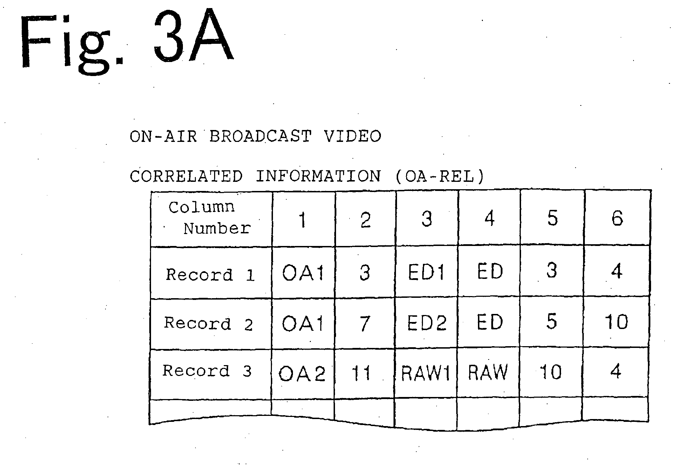

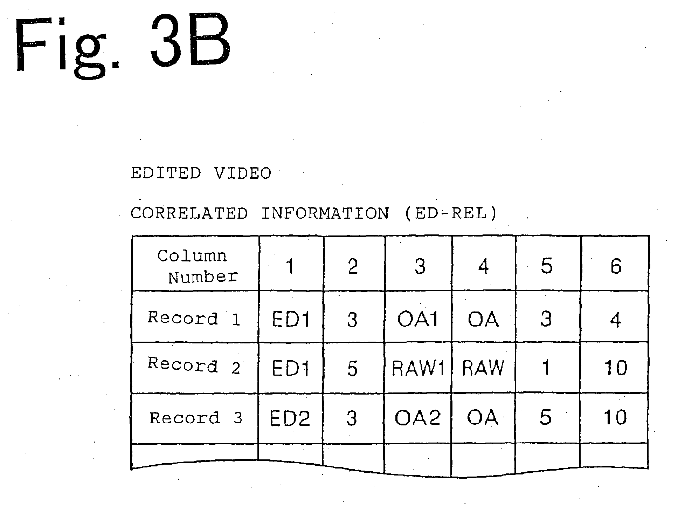

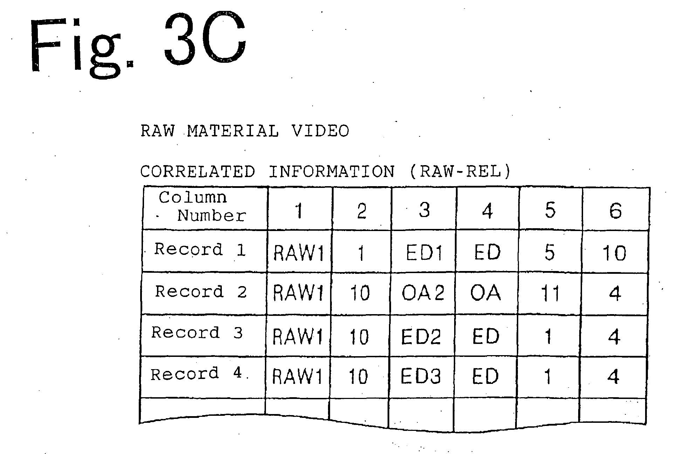

FIG. 3A is a schematic view showing an example of the storage table of the on-air broadcast video correlated information. FIG. 3B is a schematic view showing an example of the storage table of the edited video correlated information. FIG. 3C is a schematic view showing an example of the storage table of the raw material video correlated information.

As shown in FIG. 3A, the on-air broadcast video correlated information is stored for each on-air broadcast video section of each on-air broadcast video in the form shown in FIG. 2A. For example, a stored record 1 indicates that four frames long from a third frame of an on-air broadcast video OA1 are equivalent to four frames long from a third frame of an edited video ED1. Similarly, a record 2 indicates that 10 frames long from a seventh frame of the same on-air broadcast video OA1 are equivalent to 10 frames long from a fifth frame of an edited video ED2. The tables in FIG 3B and FIG. 3C are exactly alike.

### C: Generation of correlation information

First, information showing a correlation that which part of one edited video is quoted from which part of which raw material video is called edited video-to-raw material video correlation information (ED-RAW correlation information). For this information, it is advisable to record the raw material videos selected during the editing stage in the system. In addition, information showing a correlation that which part of one on-air broadcast video is broadcast with the use of which part of which edited video is called on-air broadcast video-to-edited video correlation information (OA-ED correlation information). For this information, it is advisable to record the edited videos actually selected during the on-air stage in the system.

Note that if there are no records of the ED-RAW correlation information or OA-ED correlation information, for example, they may be automatically generated by associating moving image units having similar characteristics using the moving image search technology disclosed in the Japanese Unexamined Patent Publication No. 2002-58049.

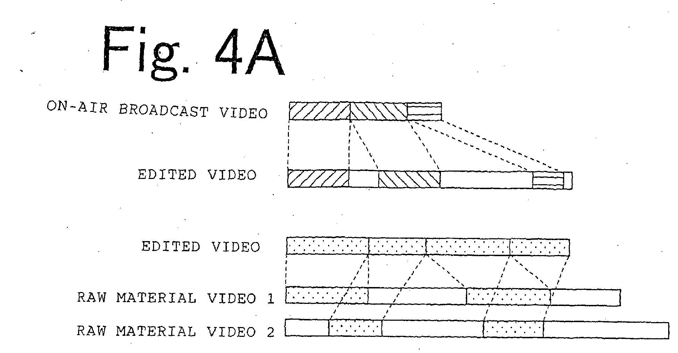

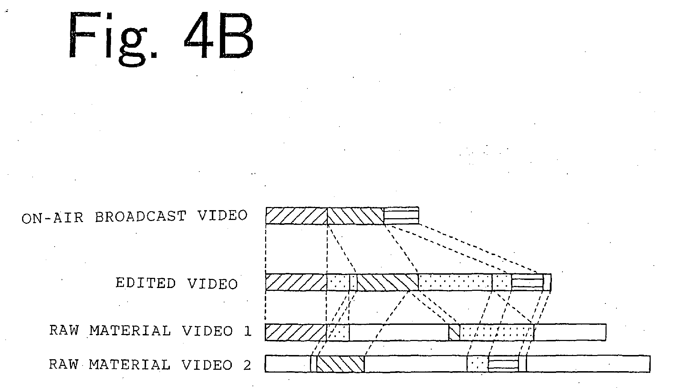

FIG 4A is a schematic view showing a correlation of the on-air broadcast video-to-edited video and a correlation of the edited video-to-raw material video. FIG 4B is a schematic view showing a correlation of the on-air broadcast video-to-edited video-to-raw material video.

As shown in FIG. 4A, the OA-ED correlation information is first referred to retrieve each video section in edited video data used in the on-air broadcast video. Then, each video section in raw material video data (hereinafter, referred to as a raw material video section) correlating to the edited video section may be identified with respect to each edited video section retrieved, by looking into the edited video correlated information including the edited video section from the ED-RAW correlation information. By associating this identified raw material video section with the aforementioned on-air broadcast video section, the OA -RAW correlation information may be obtained. As shown in FIG. 4B, if the raw material video section correlating to a specific on-air broadcast video extends over a plurality of the raw material videos, a correlation with the on-air broadcast video should be described for each correlating video section of each raw material video (refer to FIG. 3A to FIG 3C). Note that the OA-RAW correlation information may be generated and stored in advance.

The on-air broadcast video correlated information (OA-REL) that describes which part of the on-air broadcast video is quoted from which part of which edited video or raw material video is generated for each on-air broadcast video from the OA-ED correlation information and OA-RAW correlation information (refer to FIG. 3A).

The edited video correlated information (ED-REL) that describes which part of the edited video is used in which part of which on-air broadcast video, or which part of the edited video is quoted from which part of which raw material video is generated for each edited video from the OA-ED correlation information and ED-RAW correlation information (refer to FIG. 3B).

The raw material video correlated information (RAW-REL) that describes which part of the raw material video is used in which part of which edited video or on-air broadcast video is generated for each raw material video from the OA-RAW correlation information and ED-RAW correlation information (refer to FIG. 3C).

### D: Display example of raw material video correlated information

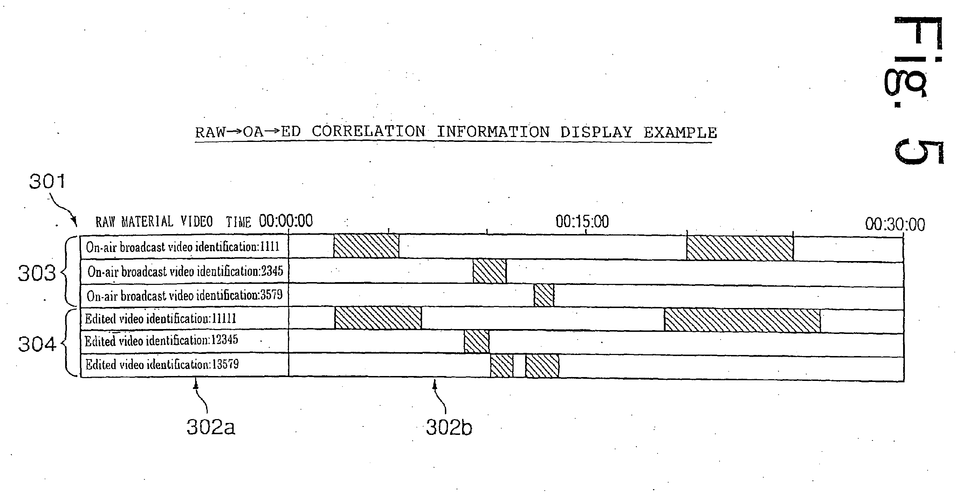

FIG 5 is a diagram showing a display example of viewing the raw material video correlated information. If one raw material video is specified, the time of the raw material video is displayed in a display field 301, and the raw material video correlated information of the specified raw material video is further referred to display a list of the "correlating video identification" and "type" shown respectively in its column numbers 3 and 4 on a display window 302a.

Additionally, a display window 302b displays the raw material video sections identified from the starting position shown in the column number 2 and the number of frames shown in the column number 6 with a mark (shadow area in the diagram). More specifically, the display window 302b marks which part is used by which correlating video (on-air broadcast video or edited video) with the time of the raw material video as a horizontal axis, while referring to the raw material correlated information.

In the example shown in FIG.5, this raw material video is used in three on-air broadcast videos and three edited videos, and sections in which each raw material video is used are being marked. This shows that a scene ranging from 20 minutes to 25 minutes of the raw material video is being used in the on-air broadcast video with an identification of 1111 at a glance.

In the present embodiment, each mark of the sections in which the raw material videos are used is displayed in the form of a button, the correlating videos in question may be displayed on a video viewing window with a click of a desired mark through the entry unit 101 such as a mouse.

### E: Display example of edited video correlated information

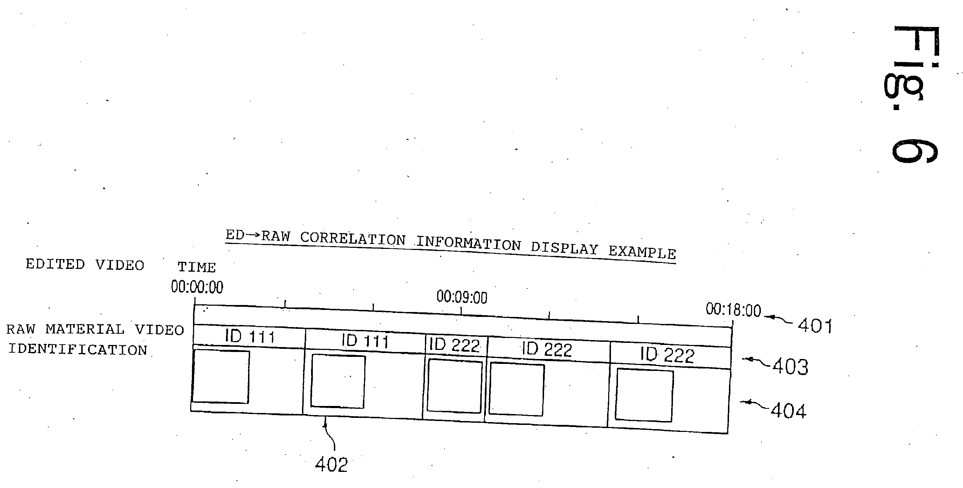

FIG. 6 is a diagram showing a display example of viewing the edited video correlated information. If one edited video is specified, the time of the edited video is displayed in a display field 401, and a mark is further put in the correlating video field of a window 402 in order to visualize the edited video section from the starting position shown in the column number 2 to the frames long shown in the column number 6. The contents of the mark include the raw material video identification in a display field 403, typical frames of the raw material video section, the frames corresponding to time of day, and the like in a display field 404.

In the present embodiment, each mark of the correlating raw material videos is displayed in the form of a button, and the correlating videos in question may be displayed on a video viewing window with a click of a desired mark through the entry unit 101 such as a mouse.

### F: Display example of on-air broadcast video correlated information

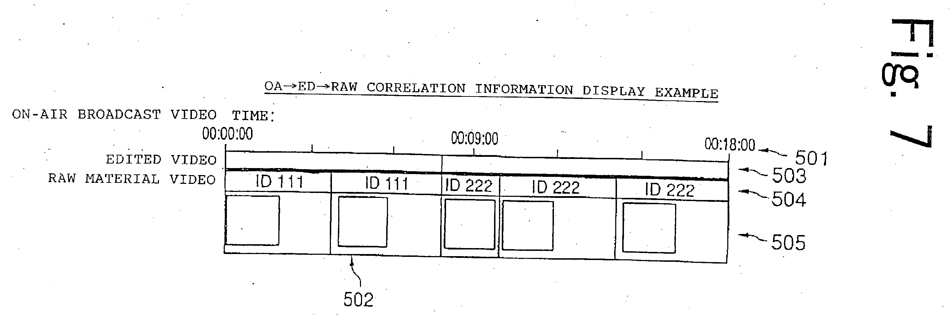

FIG. 7 is a diagram showing a display example of viewing the on-air broadcast video correlated information. If a specified video is the on-air broadcast video, it is possible to display the edited video contained in the specified on-air broadcast video, and the raw material video used for its production. The time of the specified on-air broadcast video is displayed in a display field 501, and a mark is further put in the correlating video field of a window 502 in order to visualize the on-air broadcast video section from the starting position shown in the column number 2 to the frames long shown in the column number 6. As the contents of the mark, the edited video identification may be presented in a display field 503, the raw material video identification in a display field 504, and a typical frame of the raw material video section in a display field 505, respectively.

In the present embodiment, each mark of the correlating edited videos and raw material videos is displayed in the form of a button, and the correlating videos in question may be displayed on the video viewing window with a click of a desired mark through the entry unit 101 such as a mouse.

Furthermore, a list of the same type video as the specified video, or a list of other type videos having a correlation with the specified video may be presented together.

### G: Display example of frequency-of-use

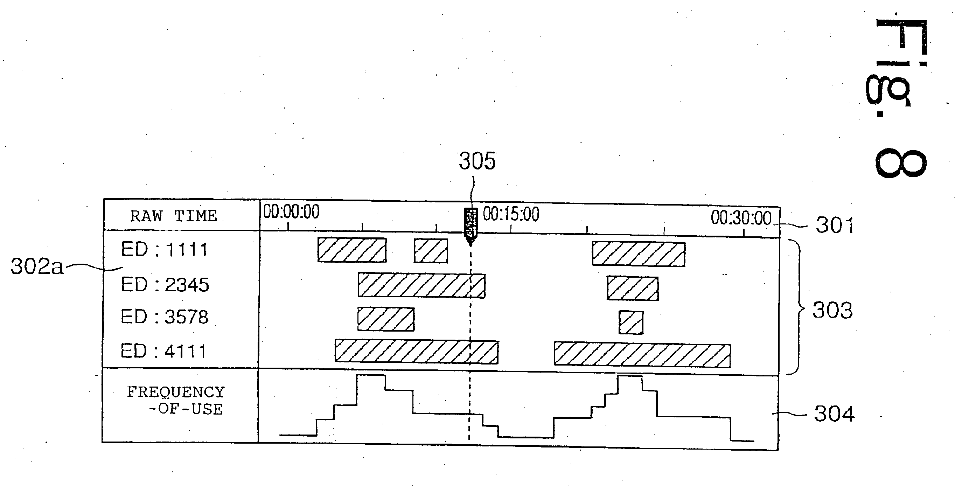

FIG. 8 is a diagram showing a display example of viewing the raw material video correlated information including frequency-of-use information. If one raw material video is specified, the time of the raw material video is displayed in a display field 301, and the raw material video correlated information of the specified raw material video is further referred to display a list of the "correlating video identification" and "type" shown in the column numbers 3 and 4 thereof on the window 302a, as described above.

In addition, a display window 303 displays the raw material video sections identified from the starting position shown in the column number 2 and the number of frames shown in the column number 6 with a mark (shadow area in the diagram). More specifically, the display window 303 marks which part is used by which correlating video (on-air broadcast video or edited video) with the time of the raw material video as a horizontal axis, while referring to the raw material video correlated information.

In the example shown in FIG. 8, this raw material video is used in four edited videos, and sections in which each raw material video is used are being marked. This shows a scene ranging from 21 minutes to 26 minutes of the raw material video is used, for example, in an edited video with an identification of 1111 at a glance.

Moreover, a display window 304 displays the frequency-of-use for each frame with a vertical axis as the frequency-of-use, and with a horizontal axis as a time axis. A method of calculating the frequency-of-use will hereinafter be described.

The pointer 305 in FIG 8 may be moved along the time axis with a mouse, and the like, and the raw material video at the time of day corresponding to the position of the pointer on the time axis may be displayed on the display unit 102. This function allows the beginning of a video to be located at the time position specified by the pointer with viewing of the frequency-of-use, so that easy access to a portion with high (or low) frequency-of-use provides increased production efficiency.

### H: Display example of operation screen

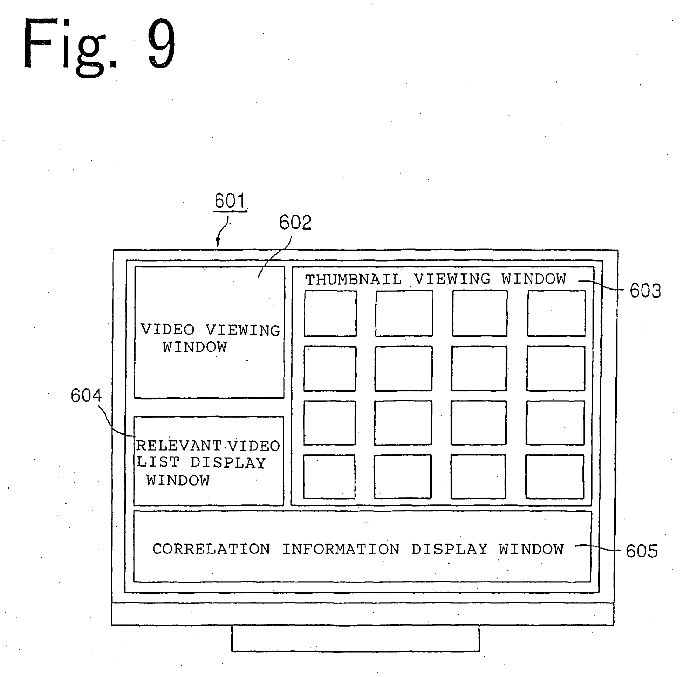

FIG. 9 is a schematic view showing an example of the operation screen of the video viewing system according to the present embodiment. In an operation screen 601 displayed on the display unit 102, a video viewing window 602 displays the video correlating to the identification specified by a viewer, and a thumbnail display window 603 displays a list of the image of the starting position given and images before and after its image, together. Specification of a video to view may be directly given by the identification of the video through a keyboard of the entry unit 101. Additionally, after preparing a list of a video and providing a user with the possibility to select the video using a mouse, and the like, the identification of the selected video may be used. The starting position of the video to view may be also entered together.

Moreover, a related information list display window 604 displays a list of the same type video as the specified video, or a list of other type video having a correlation with the specified video. A correlation information display window 605 displays such correlation information and frequency-of-use information as are exemplified in FIG. 5 to FIG. 8.

In this way, correlation information between different video types is visualized and the related video lists are also displayed, so that video viewing efficiency may be further increased. Additionally, as described above, a button is provided in the correlation information visualized on the correlation information display window 605, and is specified with a mouse, and the like through the entry unit 101, thereby providing easy access to the correlating video section. For example, if the frequency-of-use is displayed, the raw material video at the corresponding time of day may be displayed on the video viewing window 602 by moving the pointer 305 to a desired position.

### I: Calculation of frequency-of-use

FIG. 10 is a flow chart showing a procedure for the frequency-of-use calculation according to the present embodiment. First, the on-air broadcast video correlated information (OA-REL), edited video correlated information (ED-REL), and raw material video correlated information (RAW-REL), which are made to correlate in advance, are stored in the correlation information storage unit 108, and then a frequency-of-use counter is reset (Step A1).

A user specifies a video to view from the entry unit 101 (Step A2). In specifying the video to view, the identification may be directly entered, or the user may select from a list of videos displayed in advance. In addition, as described above, the video may be specified by selecting a video section having a correlation or the starting position thereof from the correlation information displayed on the correlation information display window 605.

When the identification of the specified video is identified, the program control processor 103 directs the video retrieval unit 105 to retrieve the desired video in question. The video retrieval unit 105 searches the video storage unit 106 by using the specified identification as a clue (Step A3).

When a video having the specified identification is found (YES in Step A3), the video retrieval unit 105 returns the specified video data to the program control processor 103. The program control processor 103 processes the specified video data before displaying it on the video viewing window 602 on the display unit 102 (Step A5).

Subsequently, the program control processor 103 directs the correlation information retrieval unit 107 to make retrieval using the specified identification. The correlation information retrieval unit 107 searches the correlation information storage unit 108 by using the specified identification as a clue (Step A6), and judges whether correlation information having the specified identification and still remaining uncounted exists or not (Step B1). And, the frequency-of-use calculation unit 109 repeats Steps B2 to B4 until all the specified correlation information is counted. When all is counted (NO in Step B1), the result is graphed and displayed (Steps B5 to B6). Hereinafter, the count and graph operation shown in Steps B 1 to B6 will be described with reference to FIG. 11 to FIG. 13.

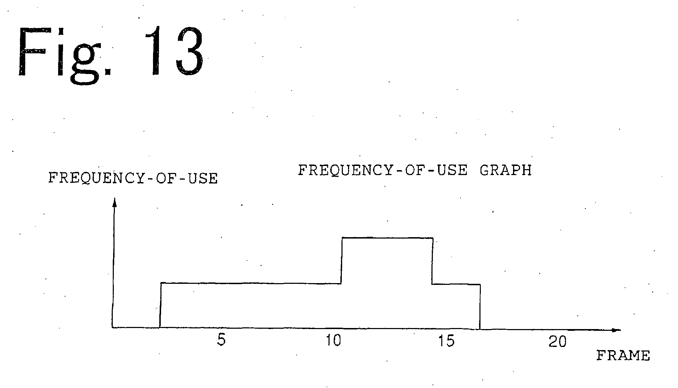

FIG. 11 is a schematic view showing an example of the storage table of the raw material video correlated information, FIG. 12 being a frequency-of-use table showing the result counted for each frame, FIG. 13 being a graph in which the frequency-of-use table of FIG 12 is visualized.

As shown in FIG 11, the raw material video correlated information is stored for each video section of each raw material video in the form shown in FIG 2C. For example, record 1 indicates that four frames long from a third frame of a raw material video A1 are being used in other videos. Similarly, record 2 indicates that 10 frames long from a seventh frame of the same raw material video A1 are being used in other videos. In this way, reference to the raw material video correlated information allows for identification of which frame of the raw material video A1 is being used in which video.

In Step B1 of FIG. 10, if correlation information having the specified identification and still remaining uncounted exists (YES in Step B1), one unprocessed record of the specified correlation information (here, A1) stored in the table shown in FIG 11 is read (Step B2). The information to be read is the start frame number of the raw material video (column number 2), and the number of frames of the video section thereof (column number 6).
The frame number of the used raw material video is then identified from the start frame number of the raw material video, and the number of frames of the video section thereof. And, the frequency-of-use count corresponding to the identified frame numbers respectively is added by one (Step B4). The aforementioned Steps B2 to B4 are repeated until all records of the specified correlation information are counted. This allows each of the frequency-of-use to be counted for each used frame of the raw material video A1, finally providing a table of the frequency-of-use for each frame shown in FIG. 12.

The thus obtained frequency-of-use table is outputted to the program control processor 103, subjected to graph processing (Step B5), and displayed on the frequency-of-use window 304 shown in FIG. 8 as a frequency-of-use graph like the one shown in FIG. 13.

Note that if a video having the identification provided in step A4 is not detected, it is judged as being inability to view, and a message, and the like which show the inability to view will be displayed (Step A9).

As has been described above, since the first embodiment is constructed in such a way that the frequency-of-use information of the specified video is generated, visualized, and displayed, the frequency-of-use of a video may be easily grasped.

Additionally, in the present embodiment, operation of the pointer 305 on the frequency-of-use window as shown in FIG. 8 allows for ease of access to the frame of a video with high or low frequency-of-use, thus providing increased production efficiency.

In addition, the frequency-of use may be sorted in ascending order or in descending order at a stage where the frequency-of-use table shown in FIG. 12 is obtained, thereby providing further increased ease of access to the video with high or low frequency-of-use.

### (Second Embodiment)

In the aforementioned first embodiment, as described with reference to FIG. 10, every time a video is specified, a frequency-of-use generation unit 109 has calculated the frequency-of-use of the specified video. However, according to a second embodiment of the present invention, in place of the frequency-of-use generation unit 109 shown in FIG. 1, a frequency-of-use storage unit is set up in a video viewing system, and the frequency-of-use information of each video is found and stored in this frequency-of-use storage unit in advance. This eliminates the necessity of frequency-of-use calculation every time a video is specified, thus enabling high-speed processing of the video viewing system.

### (Third Embodiment)

While in the aforementioned embodiment, an instance where a raw material video is specified has been described, the system shown in FIG. 1 uses an edited video as well as the raw material video in an on-air broadcast video. Accordingly, if the raw material video is specified, frequency-of-use information in the edited video and/or on-air broadcast video of the raw material video may be similarly obtained and visualized (here, making into a graph).

First, the description shown in FIG 2B makes it possible to identify that one video section of one edited video correlates to which video section of the on-air broadcast video or the raw material video. Also, the description shown in FIG 2C makes it possible to identify that one video section of one raw material video correlates to which video section of the on-air broadcast video or the edited video.

Therefore, with respect to the raw material video, frequencies used in the edited video and the on-air broadcast video may be found, and with respect to the edited video, frequencies used in the on-air broadcast video may be found. In this case, the correlation information on the specified identification in Step A6 of the flow chart shown in FIG 10 is just divided into a case with the edited video and a case with the on-air broadcast video, and the basic operation is similar to that described in the first embodiment with reference to FIG 10 to FIG. 13, so that the detailed description will be omitted.

More specifically, according to the third embodiment, when a specified video is the raw material video, raw material correlation information is read, and frequencies used in the edited video and the on-air broadcast video are found with respect to each frame contained in the raw material video to comprise the frequency-of-use information.

Graphing and displaying such frequency-of-use information allows for an easy grasp of the frequency-of-use of a video such that how many times which part of the raw material video is quoted in the on-air broadcast video or the edited video, or such that how many times which part of the edited video is quoted in the on-air broadcast video.

Furthermore, in the present embodiment, a pointer on the time axis of a correlation information display window 605 is operated with a mouse, and the like, thereby providing ease of access to a portion with high (or low) frequency-of-use to achieve increased production efficiency.

In addition, the frequency-of-use is sorted in ascending order or in descending order at a stage where the frequency-of-use table shown in FIG. 12 is obtained, thereby providing further increased ease of access to the video with high or low frequency-of-use.

### (Fourth Embodiment)

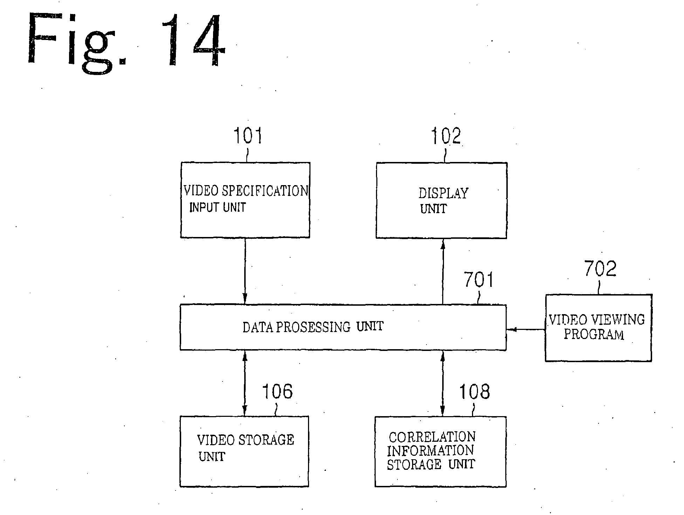

FIG. 14 is a block diagram of a video viewing system according to a fourth embodiment of the present invention. According to the present embodiment, the video retrieval unit 105, the correlation information retrieval unit 107, and the frequency-of-use calculation unit 109 shown in FIG. 1 are implemented in a data processing unit 701 by means of software. That is, the data processing unit 701 may achieve video viewing functions equivalent to those described in the first embodiment to the third embodiment by executing a video viewing program 702. An entry unit 101, a display unit 102, a video storage unit 106, and a correlation information storage unit 108 may be controlled in a similar manner to the first, second, or third embodiment by means of the data processing unit 701 which executes the video viewing program 702, to realize the video viewing system according to the present invention.

Incidentally, while three types of video groups of the raw material video, the edited video, and the on-air broadcast video have been described in the aforementioned embodiments, it goes without saying that they may be extended to video groups of more than three types having an interest, for example, such a case as the contents, and the like produced by quoting the on-air broadcast video are made targets to view.

As has been described in detail hereinbefore, according to the present invention, the usage status of a plurality of video groups may be easily grasped. More specifically, when a video on the part of being used is specified, the frequency-of-use information is generated, visualized, and displayed. For this reason, the usage status of the plurality of video groups may be easily grasped.

For example, if three types of video groups of the raw material video, the edited video and the on-air broadcast video are stored, and the raw material video is specified, frequencies used in the edited video and the on-air broadcast video with respect to each frame contained in the raw material video are found to comprise the frequency-of-use information. Furthermore, upon specifying the edited video, frequencies used in the on-air broadcast video with respect to each frame contained in the edited video are found to comprise the frequency-of-use information. Graphing and displaying such frequency-of-use information allows for an easy grasp of the frequency-of-use of a video such that how many times which part of the raw material video is quoted in the on-air broadcast video or the edited video, or such that how many times which part of the edited video is quoted in the on-air broadcast video.

Moreover, a pointer is provided on the time axis of a correlation information display window and operated with a mouse, and the like, thereby providing ease of access to a portion with high (or low) frequency-of-use to achieve increased production efficiency.

Also, the calculated frequency-of-use is sorted in ascending order or in descending order, thereby providing further increased ease of access to the video with high or low frequency-of-use.

### Industrial Applicability

The video viewing system and method thereof according to the present invention may be applied to everything, and are to be considered as no restrictive in the applicability thereof, as far as being a video viewing system and method thereof for viewing a desired video from a plurality of videos in editing work for video production.

While the present invention has been described by associating with some preferred embodiments and examples, it is to be understood that these embodiments and examples are merely for illustrative of the invention by an example, and not restrictive. While it will be obvious to those skilled in the art that various changes and substitutions by equivalent components and techniques are eased upon reading the specification, it is believed obvious that such changes and substitutions fit into the true scope and spirit of the accompanying claims.

## Claims

1. A video viewing system,
wherein a video of any one video group of a first video group, and a second video group produced by use of said first video group is specified, whereby frequency-of-use in other video groups of the specified video is found and displayed.

2. A video viewing system,
wherein a video of any one video group of a first video group, a second video group produced by use of said first video group, and a third video group produced by use of said second video group is specified, whereby frequency-of-use of said specified video in other video groups having a correlation with the specified video is found and displayed.

3. A video viewing system for viewing a desired video from a plurality of videos, comprising:
a first storage unit which stores to enable retrieval of a plurality of video groups having a series of correlations that at least one video of one video group is used to produce a video of the next video group;
a second storage unit which stores to enable retrieval of mutual correlations obtained from said series of correlations;
a frequency-of-use generation unit which upon specification of a video of any one video group of said plurality of video groups, retrieves a correlation with respect to said specified video from said second storage unit to generate frequency-of-use of said specified video in other video groups based on the retrieved correlation; and
a control unit which displays said frequency-of-use on a display unit.

4. The video viewing system according to claim 3,
wherein said second storage unit stores to enable retrieval of correlation information showing that each video section correlates to one video section of other video groups for each of said plurality of video groups.

5. The video viewing system according to claim 4,
wherein said frequency-of-use generation unit comprises:
a retrieval unit which upon specification of a video of any one video group of said plurality of video groups, retrieves correlation information on said specified video from said second storage unit to identify a used video section in other video groups of said specified video; and
a frequency-of-use calculation unit which generates frequency-of-use of said specified video in said other video groups based on said used video section.

6. The video viewing system according to claim 4,
wherein said control unit graphs and displays frequency-of-use of said specified video in said other video groups based on a video section of said specified video.

7. The video viewing system according to claim 6,
wherein said control unit displays a pointer movable in a time axis direction of the video section of said specified video together with said graphed frequency-of-use, and displays said specified video from a time position indicated by said pointer when said pointer is operated.

8. The video viewing system according to claim 3,
wherein said control unit sorts and displays said frequency-of-use in any one of ascending order and descending order.

9. A video viewing method for viewing a desired video from a plurality of videos, comprising:
a) storing to enable retrieval of a plurality of video groups having a series of correlations that at least one video of one video group is used to produce a video of the next video group;
b) storing to enable retrieval of correlation information which is generated from said series of correlations and which shows that each video section correlates to one video section of other video groups for each of said plurality of video groups;
c) retrieving, upon specification of a video of any one video group of said plurality of video groups, correlation information on said specified video to identify a used video section in other video groups of said specified video;
d) generating frequency-of-use of said specified video in said other video groups based on said used video section; and
e) displaying said frequency-of-use on a display unit.

10. The video viewing method according to claim 9,
wherein in said step d), said frequency-of-use is generated by identifying a used frame number of said specified video from said used video section , and counting said used frame number in all used video sections in said other video groups.

11. The video viewing method according to claim 9,
wherein in said step e), the frequency-of-use of said specified video in said other video groups is graphed and displayed based on a video section of said specified video.

12. The video viewing method according to claim 11, further comprising:
f) displaying a pointer movable in a time axis direction of the video section of said specified video together with said graphed frequency-of-use; and
g) displaying said specified video from a time position indicated by said pointer when said pointer is operated.

13. A computer program for making a computer run video viewing processing for viewing a desired video from a plurality of video groups having a series of correlations that at least one video of one video group is used to produce a video of the next video group, the computer program comprising the steps of:
storing to enable retrieval of correlation information which is generated from said series of correlations and which shows that each video section correlates to one video section of other video groups for each of said plurality of video groups;
retrieving, upon specification of a video of any one video group of said plurality of video groups, correlation information on said specified video to identify a used video section in other video groups of said specified video;
generating frequency-of-use of said specified video in said other video groups based on said used video section; and
displaying said frequency-of-use on a display unit.

14. A video viewing method for viewing a desired video from a plurality of videos,
wherein a video of any one video group of a first video group, and a second video group produced by use of said first video group is specified, whereby frequency-of-use in other video groups of the specified video is found and displayed.

15. The video viewing method according to claim 14,
wherein the frequency-of-use of said specified video in said other video groups is found based on a used video section in other video groups of said specified video.

16. The video viewing method according to claim 15,
wherein said used video section is identified based on correlation information showing that each video section correlates to one video section of other video groups for each of a plurality of video groups having a series of correlations that at least one video of one video group is used to produce a video of the next video group.

17. The video viewing method according to claim 14,
wherein the frequency-of-use of said specified video in said other video groups is graphed and displayed based on a video section of said specified video.

18. The video viewing method according to claim 17,
wherein a pointer movable in a time axis direction of the video section of said specified video is displayed together with said graphed frequency-of-use, and
wherein said specified video is displayed from a time position indicated by said pointer when said pointer is operated.

19. The video viewing method according to claim 14,
wherein said frequency-of-use is sorted and displayed in any one of ascending order and descending order.

20. A video viewing method for viewing a desired video from a plurality of videos,
wherein a video of any one video group of a first video group, a second video group produced by use of said first video group, and a third video group produced by use of said second video group is specified, whereby frequency-of-use of said specified video in other video groups having a correlation with the specified video is found and displayed.

21. The video viewing method according to claim 20,
wherein the frequency-of-use of said specified video in said other video groups is found based on a used video section in other video groups of said specified video.

22. The video viewing method according to claim 21,
wherein said used video section is identified based on correlation information showing that each video section correlates to one video section of other video groups for each of a plurality of video groups having a series of correlations that at least one video of one video group is used to produce a video of the next video group.

23. The video viewing method according to claim 20,
wherein the frequency-of-use of said specified video in said other video groups is graphed and displayed based on a video section of said specified video.

24. The video viewing method according to claim 23,
wherein a pointer movable in a time axis direction of the video section of said specified video is displayed together with said graphed frequency-of-use, and
wherein said specified video is displayed from a time position indicated by said pointer when said pointer is operated.

25. The video viewing method according to claim 20,
wherein said frequency-of-use is sorted and displayed in any one of ascending order and descending order.
